# EUROPÄISCHE PATENTSCHRIFT

(11) **EP 4 176 705 B1**
(45) Veröffentlichungstag und Bekanntmachung des Hinweises auf die Patenterteilung: **21.10.2026**
(21) Anmeldenummer: 22206133.5
(22) Anmeldetag: 08.11.2022
(51) Int. Cl.: A01F 15/08, A01F 15/07

(54) **RUNDBALLENPRESSE MIT EINER VORRICHTUNG ZUM KLEMMEN EINES BALLENS**
ROUND BALER WITH A DEVICE FOR CLAMPING A BALE
PRESSE À BALLES RONDES AVEC UN DISPOSITIF POUR SERRER UNE BALLE

(30) Priorität: 08.11.2021 DE 102021128945
(43) Veröffentlichungstag der Anmeldung: 10.05.2023
(73) Patentinhaber: Maschinenfabrik Bernard Krone GmbH & Co. KG, 48480 Spelle (DE)
(72) Erfinder: JÜRLING, Dennis, 49832 Beesten (DE); KALVERKAMP, Felix, 45665 Recklinghausen (DE); TRENTMANN, Justus, 49219 Glandorf (DE)

(56) Entgegenhaltungen:
- EP-A1- 1 446 998
- EP-A1- 3 461 322
- EP-A2- 1 512 320
- DE-A1- 3 501 062
- US-A1- 2017 332 556

## Beschreibung

Die vorliegende Erfindung betrifft eine Rundballenpresse nach dem Oberbegriff des Patentanspruchs 1.

Zur Ernte von halmartigen Erntegut gibt es Rundballenpressen, die Erntegut zu zylindrischen Ballen pressen. Dabei fährt die Rundballenpresse über das Feld und sammelt mit einer Aufnahmevorrichtung das Erntegut vom Feldboden auf, welches anschließend in eine Ballenkammer gefördert wird, die seitlich durch Seitenwände und umfangsseitig durch Pressmittel umgrenzt ist. Um den Ballen zu pressen, wird das Erntegut von den Pressmitteln in Drehung versetzt und verdichtet. Als Pressmittel werden dabei Walzen, Stabförderer und/oder Riemen eingesetzt. Nachdem der Ballen eine bestimmte Größe erreicht hat, wird er mit einem Netz, einer Folie oder dgl. Umhüllmaterial umwickelt oder mit Garn verknotet. Um den Ballen auszuwerfen, ist die Ballenkammer von einer Ballenbildungsstellung, in der sie zum Pressen des Ballens geschlossen ist, in eine Auswurfstellung verbringbar, indem eine Heckklappe und/oder ein Teil der Pressmittel nach oben verschwenkt wird. In der Auswurfstellung entsteht an der Rückseite der Rundballenpresse eine Öffnung, durch die der Ballen nach Fertigstellung aus der Ballenkammer ausgeworfen und auf dem Feldboden abgelegt kann. Bei der Ablage auf ebenem Feldboden rollt der Ballen einige Meter, bis er außerhalb des Schwenkbereiches der Heckklappe zum Stillstand kommt. Der Einsatz von Rundballenpressen in Hanglage stellt eine besondere Herausforderung dar, da der Ballen unkontrolliert von der Rundballenpresse wegrollen kann.

Die Druckschrift EP 3 165 079 B1 offenbart eine Rundballenpresse zum Pressen von zylindrischen Erntegutballen, wobei an einer Heckklappe ein Fanganschlag angeordnet ist, der beim Auswurf den auf dem Feldboden rollenden Ballen abbremst, sodass auch in Hanglage der Ballen zum Stehen kommt. Allerdings greift der Fanganschlag den Ballen an seiner Mantelfläche an, sodass die Umhüllung des Ballens beschädigt werden kann. Zudem kann der rollende Ballen sich bei starker Hanglage bereits verdrehen, bevor der Fanganschlag seine Wirkung entfalten kann. Damit zudem unterschiedliche Größen von Ballen aufgefangen werden können, müsste der Anschlag mit der Heckklappe in verschiedene Höhen verbringbar sein, sodass eine aufwendige Ansteuerung der Heckklappe implementiert werden muss.

Weitere Ballenpressen sind aus EP 1 512 320 A2, EP 1 446 998 A1, DE 35 01 062 A1, US 2017/332556 A1 und EP 3 461 322 A1 bekannt.

Aufgabe der Erfindung ist es eine Rundballenpresse bereitzustellen, mit der die oben genannten Nachteile vermeidbar sind und eine beschädigungsfreie Ablage auf einem Feldboden in Hanglage sichergestellt ist.

Die Aufgabe wird gelöst mit einer Rundballenpresse mit den Merkmalen des unabhängigen Patentanspruchs 1.

Vorteilhafte Ausführungsformen sind den abhängigen Ansprüchen entnehmbar.

Dafür wird eine Rundballenpresse geschaffen, die zur Herstellung von zylinderförmigen Erntegutballen geeignet ist. Sie umfasst einen Rahmen, der von einem Fahrgestell getragen ist, eine Ballenkammer mit Pressmitteln zum Pressen des Ernteguts und eine Einrichtung zum Umhüllen des Ballens mit einem Umhüllmaterial. Dabei weist die Ballenkammer an einer Rückseite der Rundballenpresse eine Öffnung zur Abgabe des Ballens auf dem Feldboden auf. Zudem weist die Rundballenpresse einen Ablageraum auf, der der Öffnung nachgeordnet ist und in den der Ballen bei Abgabe auf den Feldboden abgelegt wird. Die Rundballenpresse zeichnet sich dadurch aus, dass sie eine Vorrichtung aufweist, die dazu eingerichtet ist, mit wenigstens einer Stirnseite des Ballens zusammenzuwirken und den Ballen bei der Abgabe in den Ablageraum zu klemmen.

Bevorzugt ist der Ballen bei der Ablage von der Vorrichtung seitlich geführt. Außerdem ist bevorzugt, dass der Ballen an seinen Stirnseiten von der Vorrichtung seitlich eingeklemmt ist. Er kann sich daher in einer Hanglage nicht verdrehen. Somit verbleibt der Ballen im Wesentlichen in einer Ausrichtung, in der er in der Ballenkammer geformt und aus dieser ausgeworfen ist. Aufgrund der Anordnung der Vorrichtung im Auswurfbereich, kann der Ballen bei der Ablage auf dem Feldboden entlang der Radachse ausgerichtet bleiben, sodass er nicht die Räder der Rundballenpresse kontaktiert. Das Klemmen des Ballens ermöglicht es zudem, dass der Ballen nicht unkontrolliert von der Rundballenpresse wegrollt, sondern kontrolliert zum Stehen kommt. Da der Ballen seitlich geführt und/oder geklemmt wird, bleibt außerdem das Umhüllmaterial auf der Mantelfläche des Ballens unberührt, sodass es nicht durch Vorrichtungen, die den Ballen an der Mantelfläche abbremsen und/oder klemmen, beschädigt wird.

Die Rundballenpresse ist bevorzugt in der Art einer gezogenen oder selbstfahrenden Maschine ausgeführt. Zur Fortbewegung weist sie vorzugsweise an ihrem Fahrgestell Bodeneingriffsmittel, wie Räder, Raupen oder dgl. auf. Dabei sammelt bevorzugt in einem Erntebetrieb eine Aufnahmevorrichtung, insbesondere Pick-Up, während einer Fahrt in eine Fahrtrichtung geschnittenes Erntegut vom Feldboden auf, worauf ein, vorzugsweise als Förderrotor ausgebildetes, Fördermittel das Erntegut in die Ballenkammer fördert. Dabei kann am Förderrotor optional ein Schneidwerk zur Zerkleinerung des Ernteguts angeordnet sein.

Das der Ballenkammer zugeführte Erntegut wird von angetriebenen Pressmitteln in Drehung versetzt und zu einem zylindrischen Ballen geformt. Dabei ist die Ballenkammer seitlich durch Seitenwände des Rahmens und umfangsseitig durch die Pressmittel umgrenzt, die die Ballenkammer im Hinblick auf die Mantelfläche des Ballens abgrenzen. Die Pressmittel können dabei antreibbare Walzen sein, die kreisförmig um die Ballenkammer angeordnet und an den Seitenwänden eines Pressgehäuses abgestützt sind. Es können aber auch ein oder mehrere Riemen als Pressmittel verwendbar sein, die von antreibbaren Führungswalzen geführt und angetrieben sind und die dabei die Ballenkammer nahezu kreisförmig umgrenzen.

Der in der Ballenkammer entstehende Ballen kann auch durch einen Stabförderer umgrenzt sein.

Um den Ballen auszuwerfen, ist die Ballenkammer bevorzugt von einer Ballenbildungsstellung, in der sie zur Bildung des Ballens geschlossen ist, in eine Auswurfstellung überführbar. Dazu ist es bevorzugt, dass zur Überführung von der Ballenbildungsstellung in die Auswurfstellung zumindest ein Teil der Pressmittel aus einer die Ballenkammer umgrenzenden Stellung in eine von der Mantelfläche des Ballens abgehobenen Stellung überführbar ist. Dafür kann sowohl ein Teil der Führungswalzen des Pressriemens oder Stabförderers als auch ein Teil der Presswalzen verschwenkbar angeordnet sein. In der Auswurfstellung bildet sich dadurch eine Öffnung an der Rückseite der Rundballenpresse für den Auswurf des Ballens aus.

Der Auswurf des Ballens erfolgt bevorzugt durch die Schwerkraft des Ballens und/oder unterstützt durch Auswurfkräfte. Dabei rollt und/oder fällt der Ballen in den Ablageraum, der sich, ausgehend von der Öffnung der Ballenkammer, entgegen der Fahrtrichtung nach hinten erstreckt und seitlich durch die Räder der Rundballenpresse begrenzt ist. Bevorzugt weist der Ablageraum dabei entgegen der Fahrtrichtung eine Erstreckung bis zu einem Punkt auf, bis zu dem der Ballen bei einer Ablage auf einem ebenen Feldboden ausrollen würde.

Erfindungsgemäß weist die Vorrichtung mindestens zwei Ausleger auf, die voneinander beabstandet und an gegenüberliegenden Seiten des Ablageraums angeordnet sind. Die gegenüberliegenden Seiten des Ablageraums begrenzen den Ablageraum seitlich zwischen den Rädern. Dadurch wirken die Ausleger der Vorrichtung beim Führen und/oder Klemmen des Ballens mit wenigstens einer der Stirnseiten des Ballens zusammen.

Die Ausleger sind zudem bevorzugt zwischen den Rädern der Rundballenpresse an der Rückseite der Rundballenpresse angeordnet. Die Ausleger erstrecken sich weiterhin bevorzugt im Wesentlichen entgegen der Fahrtrichtung nach hinten. Sie erstrecken sich dabei weiterhin bevorzugt als eine Verlängerung der Seitenwände des Pressgehäuses nach hinten. Besonders bevorzugt sind die Ausleger zwischen den Rädern der Rundballenpresse angeordnet. Dabei wird der Ballen bevorzugt zwischen den Rädern seitlich geführt, sodass Beschädigungen am Ballen durch Kontakt mit den Rädern vermeidbar sind. Dabei sind die Ausleger weiterhin bevorzugt auf einer Höhe der Radachse positioniert. Dadurch sind die durch den Ausleger aufgenommenen Kräfte optimal auf den Rahmen der Maschine übertragbar und können kostenoptimiert dimensioniert sein.

Erfindungsgemäß ist es, dass ein Abstand zwischen den Auslegern wenigstens bereichsweise verstellbar vorgesehen ist. Dabei ist der Abstand besonders bevorzugt zumindest bereichsweise in Erstreckungsrichtung der Ausleger und/oder in einer Richtung, die sich quer zur Fahrtrichtung nach oben erstreckt, verstellbar. In einer bevorzugten Ausführungsform ist der Abstand entgegen der Fahrtrichtung abnehmend verstellbar. Dadurch rollt und/oder fällt der Ballen bei der Ballenablage derart in den Ablageraum zwischen die Ausleger, dass er von diesen schonend abgebremst und/oder geklemmt wird. Besonders vorteilhaft ist dabei, dass die Ausleger den Ballen an seinen Stirnseiten angreifend abbremsen und/oder klemmen, sodass das Umhüllmaterial auf der Mantelfläche des Ballens von diesen unberührt ist. Dadurch wird das Umhüllmaterial auf der Mantelfläche geschont und erfährt keine Beschädigungen. Aufgrund dessen kann auch kostengünstig weniger und/oder dünneres Umhüllmaterial zur Ummantelung des Ballens verwendet werden. Weitergehend ist es bevorzugt, dass die Vorrichtung einen ersten Bereich, in dem der Abstand zwischen den Auslegern gleichbleibend vorgesehen ist, und/oder einen zweiten Bereich, in dem der Abstand zwischen den Auslegern veränderbar vorgesehen ist, aufweist. Dadurch kann der Ballen bei der Ablage in den Ablageraum in dem ersten Bereich geführt und/oder in dem zweiten Bereich gebremst und/oder geklemmt sein. Die Vorrichtung weist somit vorzugsweise einen Führungsbereich, in dem der Ballen geführt ist, und einen Klemmbereich, in dem der Ballen schonend abgebremst und/oder geklemmt wird, auf.

Besonders bevorzugt ist der erste Bereich zwischen den Rädern angeordnet, und ist optional entgegen der Fahrtrichtung über die Räder hinaus nach hinten verlängert. Durch die Anordnung zwischen den Rädern ist die Maschine besonders kompakt aufbaubar, da die Spurbreite minimal gehalten werden kann. Indes ist es erfindungsgemäß, dass der zweite Bereich dem ersten Bereich in Erstreckungsrichtung der Ausleger nachgeordnet ist und/oder hinter den Rädern angeordnet ist. Da der Ballen somit im ersten Bereich seitlich geführt wird und dann im zweiten Bereich abgebremst und/oder eingeklemmt wird, ist sichergestellt, dass der Ballen zwischen und/oder hinter den Rädern kontrolliert zum Stillstand kommt. Dabei kann eine Position, an der der Ballen zum Stillstand kommt, vorzugsweise durch die Erstreckung des zweiten Bereichs entgegen der Fahrtrichtung nach hinten festgelegt sein.

Zumindest einer der Ausleger weist bevorzugt einen feststehenden Abschnitt und/oder einen verstellbaren Abschnitt auf. Die Ausleger sind vorzugsweise jeweils an einer Seitenwand des Gehäuses und/oder an einem Achsaufbau des Fahrgestell angebracht. Insbesondere kann der Ausleger dabei gelenkig oder ortsfest angebracht sein. Besonders bevorzugt ist dabei der feststehende Abschnitt ortsfest an der Seitenwand des Gehäuses und/oder an dem Achsaufbau des Fahrgestells angebracht. Indes schließt sich der verstellbare Abschnitt dem feststehenden Abschnitt entgegen der Fahrtrichtung an. Die Ausleger sind damit kostengünstig in die Rundballenpresse integrierbar.

Im Übrigen ist es erfindungsgemäß, dass zumindest einer der Ausleger reversibel von einer Freigabestellung in eine Klemmstellung überführbar ist, in der der Abstand zwischen den Auslegern gegenüber der Freigabestellung zumindest bereichsweise verringert ist. Dabei ist der überführbare Ausleger in der Freigabestellung vorzugsweise nicht im Kontakt mit dem Ballen. Insofern ist der Ballen in der Klemmstellung zwischen den Auslegern einklemmbar, während er in der Freigabestellung freigebbar ist, sodass die Rundballenpresse die Arbeitsfahrt nach der Ballenablage ohne Behinderung oder Beschädigung des Ballens fortsetzen kann.

Die Klemmstellung ist dafür vorgesehen, den Ballen zunächst bei der Abgabe in den Ablageraum zu führen. Zudem ist die Klemmstellung dafür vorgesehen, den in den Ablageraum abgelegten Ballen, insbesondere bei Hanglage, gegen ein Wegrollen zu sichern. Im Anschluss daran ist die Freigabestellung dazu vorgesehen, den Ballen nach erfolgter Absicherung freizugeben. Durch Verstellen des verstellbaren Abschnitts des zumindest einen Auslegers ist der Abstand in dem zweiten Bereich der Vorrichtung in der Klemmstellung gegenüber dem ersten Bereich der Vorrichtung verringert.

Zur Überführung des zumindest einen Auslegers von der Klemmstellung in die Freigabestellung und umgekehrt ist vorzugsweise der verstellbare Abschnitt schwenkbeweglich ausgebildet. Dabei wird der verstellbare Abschnitt gegenüber dem feststehenden Abschnitt und/oder dem Rahmen und/oder dem Fahrgestell verschwenkt. Dazu ist es besonders bevorzugt, dass der verstellbare Abschnitt um eine Schwenkachse verschwenkbar ist, die sich quer zur Erstreckungsrichtung des Auslegers und/oder zu einer Ballenachse erstreckt. Weiterhin bevorzugt ist, dass der verstellbare Abschnitt in der Klemmstellung den Ballen gegen Wegrollen sichert und in der Freigabestellung den Ballen freigibt. Dabei ist es besonders bevorzugt, dass der verstellbare Abschnitt in der Klemmstellung an einer der Stirnseiten des Ballens angelegt und/oder angedrückt ist. Wenn der verstellbare Abschnitt des Auslegers an den Ballen angelegt und/oder angedrückt ist, ist der Ballen nur durch den verstellbaren Abschnitt einklemmbar und nach Verschwenken in die Freigabestellung wieder freigebbar, sodass der feststehende Abschnitt des Auslegers für eine optimale seitliche Führung des Ballens beim Ablegen auf dem Boden ausgestaltet werden kann.

In einer bevorzugten Ausführungsform, weisen beide Ausleger den verstellbaren Abschnitt auf. Dadurch erfolgt die Klemmung des Ballens symmetrisch zwischen den beiden Auslegern, sodass der Ballen sich nicht bei der Ablage verdreht. Besonders bevorzugt sind die Ausleger dabei spiegelsymmetrisch zueinander ausgebildet. Eine Belastung durch die Klemmung des Ballens wird von den Auslegern dadurch symmetrisch auf den Rahmen der Rundballenpresse übertagen. Dadurch kann die Vorrichtung kostengünstig dimensioniert sein.

In einer bevorzugten Ausführungsform ist der Abstand zwischen den Auslegern in der Klemmstellung zumindest im zweiten Bereich kleiner als eine Breite des Ballens vorgesehen. Zumindest einer der Ausleger kann dabei derart in der Klemmstellung angeordnet sein, dass er, und insbesondere sein schwenkbeweglicher Teil, in den Ablageraum hineinragen, in den sich der ausgeworfene Ballen bei der Ablage begibt. Dadurch ist eine besonders hohe Abbrems- und/oder Klemmwirkung des Ballens erreichbar, sodass dieser zuverlässig zum Stillstand kommt.

Die Ausleger weisen erfindungsgemäß jeweils zumindest eine Kontaktfläche zum Anlegen und/oder Andrücken an die Stirnseiten des Ballens auf. Dabei ist es besonders bevorzugt, dass die Kontaktfläche an dem schwenkbeweglichen Teil des Auslegers angeordnet ist. Dadurch kann der Ausleger oder der schwenkbewegliche Teil des Auslegers flächig an die Stirnseiten des Ballens angelegt und/oder angedrückt werden. Daher wird der Ballen schonend abgebremst und/oder geklemmt.

Bevorzugt weist die Vorrichtung mindestens einen Aktor auf, der dazu vorgesehen ist, eine Klemmkraft auf zumindest eine der Stirnseiten des Ballens aufzubringen. Die Vorrichtung ist somit mit Hilfe des Aktors in der Lage, auch schwere Ballen zuverlässig abzubremsen und/oder zu klemmen. In einer bevorzugten Ausführungsform kann dabei zusätzlich am Aktor ein Dämpfungs- und/oder Federelement wirken, das den Aufprall des Ballens auf die Ausleger der Vorrichtung bei der Ablage abdämpft und/oder abfedert. Dadurch können Ausfälle der Vorrichtung kostengünstig vermieden und ihre Lebenszeit erhöht werden.

Zudem weist die Vorrichtung vorzugsweise einen Aktor zum Verstellen des zumindest einen Auslegers auf. Der Aktor ist dazu vorgesehen, den verstellbaren Abschnitt so zu verstellen, dass der Ballen an seinen Stirnseiten zwischen den Auslegern verklemmt wird. Mit dem Aktor ist die Überführung des zumindest einen Auslegers von der Klemmstellung in die Freigabestellung und umgekehrt einleitbar. Dabei kann die Vorrichtung kostengünstig und kompakt realisiert sein, indem derselbe Aktor, der die Klemmkraft auf die zumindest eine Stirnseite des Ballens aufbringt, auch für die Überführung des zumindest einen Auslegers eingesetzt wird. Die Aktoren der Vorrichtung können dabei jeweils als hydraulische, pneumatische und/oder elektrische Zylinder ausgeführt sein.

Bevorzugt ist außerdem, dass der zumindest eine Ausleger ein Verstellmittel aufweist, mit dem der Abstand zwischen den Auslegern einstellbar ist. Das Verstellmittel ist dabei vorzugsweise als eine Lochreihe realisiert. Mit seinem ersten Ende ist der Aktor dabei drehbar mit einem Bolzen am feststehenden Abschnitt des Auslegers verbunden, wobei der Bolzen in einem von mehreren Löchern einer Lochreihe angebracht ist. Durch Anbringen des Bolzens in ein anderes Loch der Lochreihe, kann ein Angriffspunkt des Aktors am feststehenden Abschnitt verändert werden, d.h. der Angriffspunkt kann dadurch weiter zum Ballen hin oder vom Ballen weg angeordnet sein. Durch die Wahl eines Lochs der Lochreihe zur Anbringung des Bolzens ist somit ein Abstand zwischen den Auslegern einstellbar.

Außerdem ist bevorzugt, dass die Rundballenpresse eine Steuerungseinheit aufweist, die dazu eingerichtet ist, die Überführung des Auslegers von der Klemmstellung in die Freigabestellung und umgekehrt automatisch oder manuell einzuleiten. Die automatische Überführung in die Freigabestellung erfolgt dabei besonders bevorzugt nach Ablage des Ballens. Ebenfalls bevorzugt erfolgt die automatische Überführung in die Klemmstellung, sobald eine Überführung der Ballenkammer aus der Auswurfstellung in die Ballenbildungsstellung erfolgt ist.

Alternativ oder zusätzlich zur automatischen Überführung des Auslegers, kann auch ein Bediener der Rundballenpresse die Überführung des zumindest einen Auslegers und/oder der Ballenkammer manuell über ein Bedienelement einleiten.

In einer bevorzugten Ausführungsform, die die Aufgabe ebenfalls löst, weist die Rundballenpresse eine Gleitrolle auf, die unterhalb einer Presswalze, insbesondere einer Starterwalze, beabstandet von der Ballenkammer angeordnet ist. Besonders bevorzugt ist die Gleitrolle nahe der Öffnung und/oder im Auswurfbereich der Ballenkammer angeordnet. Die Gleitrolle ist vorzugsweise dazu vorgesehen, den Ballen beim Auswurf und/oder vor dem Aufprall auf dem Boden zu führen und/oder abgleiten zu lassen. Dadurch ist der Ballen besonders schonend auf den Feldboden ablegbar. Weiterhin bevorzugt ist die Gleitrolle oberhalb eines Achsaufbaus und/oder in Fahrtrichtung vor einer Radachse des Fahrgestells angeordnet. Somit prallt der Ballen bei der Ballenablage nicht auf dem Achsaufbau auf. Die Gleitrolle ermöglicht dabei eine für das Umhüllmaterial auf der Mantelfläche besonders schonende Ablage, sodass es nicht beschädigt wird. Anstelle der Gleitrolle kann jedoch auch kostengünstig ein Gleitblech verwendet werden, an dem der Ballen abgleiten und/oder abrollen kann.

Als Beispiel, das nicht unter die Erfindung fällt, wird ein Verfahren zum Betreiben einer solchen Rundballenpresse angegeben. Dabei umfasst das Verfahren die folgenden Schritte:
- Bildung eines zylinderförmigen Erntegutballens in der Ballenkammer in einem Feldbetrieb der Rundballenpresse;
- Auswerfen des Ballens aus der Ballenkammer; und
- Ablage des Ballens auf dem Feldboden.

Das Verfahren zeichnet sich dadurch aus, dass der Ballen bei der Ablage in einem Ablageraum der Rundballenpresse von der Vorrichtung geklemmt wird. Dabei wirkt die Vorrichtung mit wenigstens einer der Stirnseiten des Ballens zusammen.

Es ist bevorzugt, dass durch die Überführung die Vorrichtung durch die Überführung von zumindest einem Ausleger der Vorrichtung von der Freigabestellung in die Klemmstellung den Ballen bei der Ablage auf dem Feldboden gegen Wegrollen sichert. Bei der Ablage auf dem Feldboden bewegt sich dabei der Ballen dabei im Wesentlichen entgegen der Fahrtrichtung nach hinten von der Rundballenpresse weg und damit zwischen die Ausleger der Vorrichtung. Bevorzugt wird der Ballen von der Vorrichtung an seinen Stirnseiten bei der Ablage seitlich geführt. Dabei wird der Ballen vorzugsweise erst in einem Führungsbereich, in dem die Ausleger einen nahezu gleichbleibenden Abstand zueinander aufweisen, seitlich geführt und danach in einem Klemmbereich, in dem sich der Abstand zwischen den Auslegern entgegen der Fahrtrichtung verringert, bis zum Stillstand abgebremst und eingeklemmt.

Damit eine Weiterfahrt der Rundballenpresse erfolgen kann, muss der Ballen aus der eingeklemmten Position freigegeben werden. Dabei ist es bevorzugt, dass der zumindest eine Ausleger bei Weiterfahrt automatisch oder manuell in die Freigabestellung (IV) zurückgestellt wird.

Außerdem ist es bevorzugt, dass die Überführung des zumindest einen Auslegers automatisch durch die Steuerungseinheit der Rundballenpresse eingeleitet wird, indem die Steuerungseinheit ein Signal empfängt, das eine beabsichtige Weiterfahrt anzeigt. Ein solches Signal kann beispielsweise von einem Beschleunigungssensor der Rundballenpresse und/oder von einem Kuppelvorgang eines Fahrantriebs erzeugt und an die Steuerungseinheit gesendet werden.

Alternativ oder zusätzlich kann auch ein Bediener der Rundballenpresse die Überführung des Auslegers in die Freigabestellung manuell veranlassen. Bevorzugt gibt dabei die Steuerungseinheit der Rundballenpresse ein Warnsignal aus, das den Bediener dazu auffordert, die Ausleger in die Freigabestellung zu überführen, bevor die Weiterfahrt angetreten wird. Um Schäden zu vermeiden, kann die Steuerungseinheit auch automatisch die Weiterfahrt, beispielsweise durch eine Ansteuerung des Fahrantriebs, verhindern, bevor die Ausleger in die Freigabestellung verbracht wurden.

Bevorzugt erfolgt auch die Überführung des zumindest einen Auslegers in die Klemmstellung automatisch oder manuell, sobald die Ballenkammer in die Ballenbildungsstellung überführt wurde.

Um nach erfolgter Weiterfahrt einen nächsten Ballen zu bilden, ist die Ballenkammer von der Auswurfstellung in die Ballenbildungsstellung zu überführen. Da der Ballen regelmäßig bei der Ablage auf dem Feldboden innerhalb eines Schwenkradius der Heckklappe und/oder der verschwenkbaren Pressmittel zum Stillstand kommt, kann die Heckklappe und/oder die verschwenkbaren Pressmitteln erst nach unten verschwenkt werden, sobald sich der Ballen durch Vorwärtsfahren der Rundballenpresse außerhalb des Schwenkradius befindet. Daher ist es bevorzugt, dass die Rundballenpresse vor der Ablage des Ballens zurückgesetzt wird. Bei erfolgter Weiterfahrt kann die Ballenkammer somit in die Ballenbildungsstellung überführt werden, sodass erneut Erntegut zur Bildung eines neuen Ballens vom Boden aufnehmbar ist. Da die Aufnahme des Ernteguts während der Ablage unterbrochen wurde, hat das Zurücksetzen der Rundballenpresse zudem den Vorteil, dass die Aufnahme des Ernteguts an der unterbrochenen Stelle wieder fortgeführt werden kann, ohne Erntegut auf dem Feld zu belassen.

Im Übrigen ist es bevorzugt, dass bei der Ablage des Ballens in Hanglage die Rundballenpresse vor der Ablage des Ballens so ausgerichtet wird, dass der in der Ausrichtung abgelegte Ballen nicht eigenmächtig wegrollen kann. Besonders bevorzugt wird die Rundballenpresse dabei beim Zurücksetzen ausgerichtet.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch einen Schnitt durch eine erfindungsgemäße Rundballenpresse in einer Seitenansicht;
- Fig. 2: schematisch in (a) eine perspektivische Ansicht einer weiteren erfindungsgemäßen Rundballenpresse und in (b) einen vergrößerten Ausschnitt eines Teils der Ansicht aus (a);
- Fig. 3: schematisch einen Schnitt durch die Rundballenpresse aus Fig.2 in einer einen Teil der Rundballenpresse zeigenden Seitenansicht; und
- Fig. 4: schematisch eine Vorrichtung der Rundballenpresse aus Fig. 2 in einer Ansicht von oben, wobei in (a) die Vorrichtung in einer Klemmstellung gezeigt ist, während sie in (b) in einer Freigabestellung gezeigt ist.

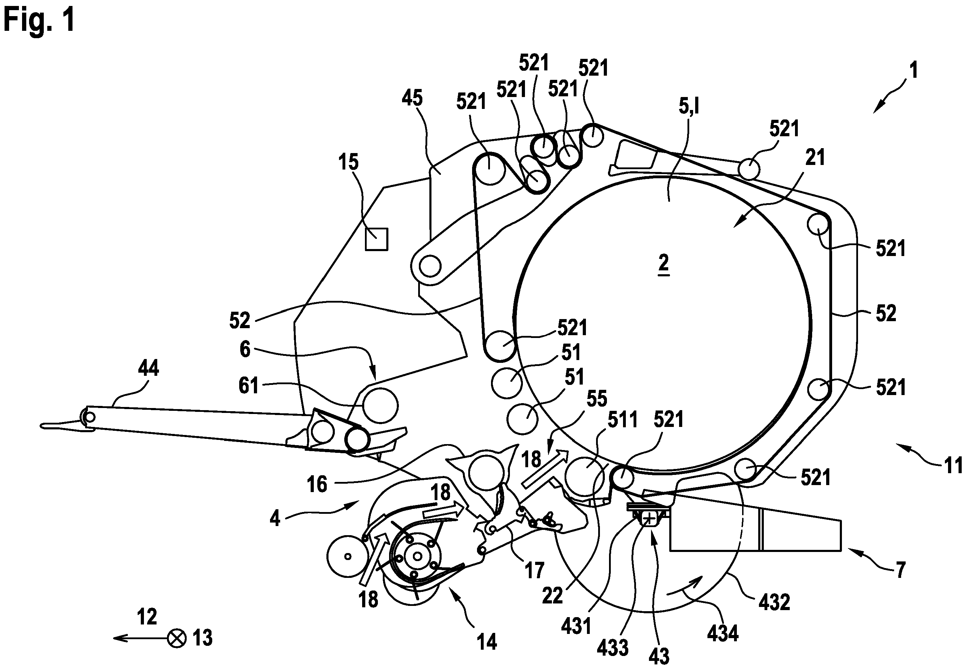

Fig. 1 zeigt eine Rundballenpresse 1, in der Form einer gezogenen Maschine. Über eine Deichsel 44 ist sie an ein Zugfahrzeug (nicht dargestellt) koppelbar. Die Deichsel ist dabei vorderseitig an einem Rahmen 4 angeordnet. Der Rahmen weist zudem ein Gehäuse 45 und ein Fahrgestell 43 mit Rädern 432 auf, die sich zur Fortbewegung der Rundballenpresse 1 in eine Fahrtrichtung 12 in einer Umlaufrichtung 434 um eine Radachse 433 drehen. Dabei sind die Radachsen 433 der Räder 432 über einen Achsaufbau 431 miteinander verbunden.

Zur Ernte von landwirtschaftlichem Erntegut (nicht dargestellt), wie Stroh, Heu und/oder Anwelksilage, wird die Rundballenpresse 1 in einem Feldbetrieb in Fahrtrichtung 12 über das Feld gezogen.

Die Rundballenpresse 1 stellt aus dem aufgesammelten Erntegut Erntegutballen 2 her, die eine zylindrischen Form, d.h. seitlich jeweils eine Stirnfläche 21 und umfangsseitig eine Mantelfläche 22, aufweisen. Dazu wird das Erntegut von einer Pick-up 14 vom Boden aufgesammelt, mit Förder- und/oder Schneidrotoren 16 in einer Gutflussrichtung 18 gefördert und durch einen Spalt 55 einer Ballenkammer 5 zugeführt, wobei es gegebenenfalls noch durch Schneidelemente 17 zerkleinert wird.

Die Ballenkammer 5, hier in einer Ballenbildungsstellung I gezeigt, ist seitlich von dem Gehäuse 45 und umfangsseitig von Pressmitteln 51, 511, 52 umgrenzt. Die Pressmittel 51, 511, 52 sind hier als antreibbare Presswalzen 511, 51 und als ein Pressriemen 52 realisiert. Dabei ist der Pressriemen 52 von Rollen 521 angetrieben und geführt, die, ebenso wie die Presswalzen 511, 51, sich in einer Richtung 13, quer zur Fahrtrichtung 12 erstrecken, und am Gehäuse 45 gelagert sind. Die Walzen 511, 51 und der Riemen 52 versetzen das kontinuierlich zugeführte Erntegut in Drehung und formen daraus den Erntegutballen 2, der derart zunehmend bis zum Erreichen einer bestimmten Größe gepresst und verdichtet wird. Überdies weist die Rundballenpresse 1 eine Einrichtung 6 auf, die ein Umhüllmaterial 61 der Ballenkammer 5 zuführt und den Ballen 2 mit dem Umhüllmaterial 61 ummantelt. Als Umhüllmaterial 61 eignet sich dabei eine Folie und/oder ein Netz.

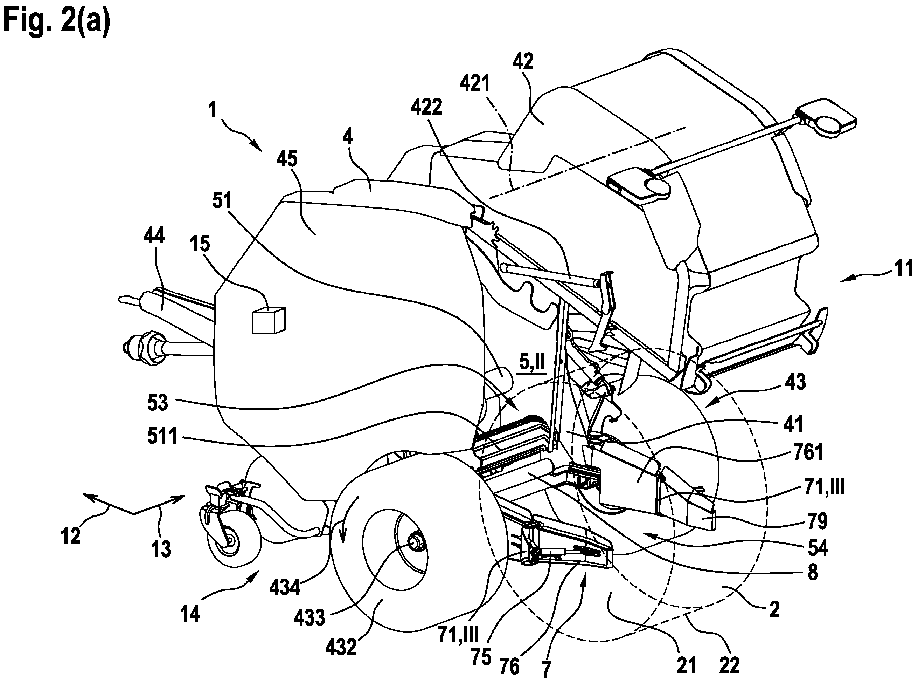

Damit der auf diese Weise geformte Ballen 2 die Ballenkammer 5 verlassen kann, ist diese von der Ballenbildungsstellung I, in der sie, wie beispielswiese in Fig. 1 gezeigt, zum Formen des Ballens 2 geschlossen ist, in eine Auswurfstellung II (siehe auch Fig. 2 (a)) überführbar ist. In der Auswurfstellung II ergibt sich dabei, wie in Fig. 2(a) dargestellt, eine Öffnung 53, durch die der Ballen 2 ausgeworfen werden kann. In Fig.1 zur besseren Übersicht nicht näher dargestellt, sind zur Überführung der Ballenkammer 5 ein Teil der den Riemen 52 führenden Rollen 521 an einer nach oben verschwenkbaren Heckklappe 42 der Rundballenpresse 1 angeordnet. Zusammen mit der Heckklappe 42 wird so ein Teil des Riemens 52 und der Rollen 521 nach oben verschwenkt, sodass die Ballenkammer 5 in die Auswurfstellung II überführt ist und eine Öffnung 53 an der Rückseite 11 freigegeben ist, durch die der Ballen ausgeworfen werden kann.

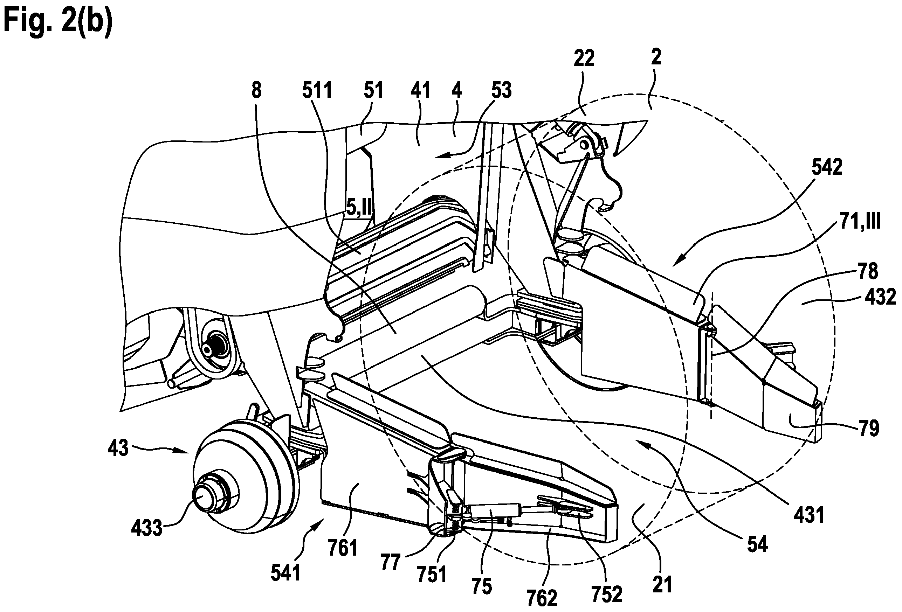

In Fig. 2 (a) ist eine Rundballenpresse 1, die analog zur Rundballenpresse 1 der Fig.1 eine Pick-up 14 und einen Rahmen 4 mit einem Räder 432 aufweisenden Fahrgestell 43 und mit einer Deichsel 44 aufweist, wobei sich die Räder 432 bei einer Fortbewegung der Rundballenpresse 1 in Fahrtrichtung 12 in Umlaufrichtung 434 um die Radachse 433 drehen. Dabei ist in Fig. 2 (b) ein Ausschnitt der Rundballenpresse 1 aus Fig. 2(a) dargestellt, wobei die Räder 432 zur besseren Übersicht ausgeblendet ist.

Analog zu Fig. 1 begrenzen die Seitenwände 41 des Gehäuses 45 eine Ballenkammer 5, die in der Fig. 2 in ihrer Auswurfstellung II dargestellt ist. Dazu ist die Heckklappe 42 entlang einer Schwenkachse 421 nach oben verschwenkt, wobei zum Verschwenken der Heckklappe 42 ein Stellzylinder 422 vorgesehen ist. Es sind dabei, hier zur besseren Übersicht ausgeblendet, der Pressriemen 52 und die ihn antreibenden und/oder führenden Rollen 521 mit der Heckklappe 42 nach oben verschwenkt. Zur Überführung der Ballenkammer 5 in die Ballenbildungsstellung I ist die Heckklappe 42 wieder reversibel nach unten verschwenkbar, sodass die Ballenkammer 5 umfangsseitig durch die Pressmittel 51, 511, 52 umgrenzt ist.

In der Auswurfstellung II weist die Ballenkammer 5 eine Öffnung 53 auf, durch die der Ballen 2 auswerfbar ist. Eine nahe der Öffnung 53 angeordnete, antreibbare Presswalze 511, fortan auch Starterwalze 511 genannt, hat neben dem Pressen des Ballens 2, zusätzlich die Funktion, durch Rotation den Ballen 2 in Bewegung zu setzen. Dadurch rollt und/oder fällt der Ballen 2 unterstützt durch die Starterwalze 511 und aufgrund seiner Schwerkraft durch die Öffnung 53 aus der Ballenkammer 5.

Der Ballen 2 verlässt in einer rollenden Bewegung entgegen der Fahrtrichtung 12 die Ballenkammer 5 und wird in einen Ablageraum 54 abgelegt. Dabei rollt der Ballen 2 über eine Gleitrolle 8 hinweg, durch die er nach unten abrollen und/oder abgleiten kann. Die Gleitrolle 8 dient dabei der Schonung des Umhüllmaterials 61 auf der Mantelfläche 22 des Ballens 2. Damit der Ballen 2 beim Verlassen der Ballenkammer 5 nicht auf dem Achsaufbau 431, der als Verbindung der Radachsen 433 dient, auftrifft, ist die Gleitrolle 8 zudem oberhalb des Achsaufbaus 431 angeordnet.

Auf diese Art und Weise verlässt der Ballen 2 die Ballenkammer 5 und wird auf dem Feldboden abgelegt. In den Darstellungen der Fig. 2(a) und (b) ist der Ballen bereits in den Ablageraum 54 abgelegt und auf dem Feldboden zwischen und hinter den Rädern 432 angeordnet.

Im Ablageraum 54 der Ballenkammer 5 ist hierbei eine Vorrichtung 7 vorgesehen, die den Ballen 2 bei der Ablage seitlich führt und/oder klemmt. Dazu weist die Vorrichtung 7 zwei Ausleger 71 auf, die an gegenüberliegenden Seiten 541, 542 des Ablageraums 54 angeordnet sind. Sie sind ferner am Rahmen 4 an der Rückseite 11 der Rundballenpresse 1 angebracht. Dabei sind sie mit den Seitenwänden 41 des Gehäuses 45 am Rahmen 4 starr verbunden und erstrecken sich im Wesentlichen entgegen der Fahrtrichtung 12 nach hinten, wobei sie damit eine seitliche Führung für den Ballen 2 beim Abrollen in den Ablageraum 54 und innerhalb des Ablageraums 54 bereitstellen. Zur Führung des Ballens sind die Ausleger 71 zudem an den Seitenwänden 41 ausgerichtet und verlängern diese in den Ablageraum 54. Die Ausleger 71 sind hierbei spiegelbildlich zu einer Mitte der Rundballenpresse 1 ausgeführt.

Ein Abstand 74 in Richtung 13, quer zur Fahrtrichtung 12, zwischen den Auslegern 71 ist in einem für die seitliche Führung des Ballens 2 vorgesehenen ersten Bereich 72 der Vorrichtung gleichbleibend. Dabei erstreckt sich der erste Bereich 72, ausgehend von der Öffnung 53, entgegen der Fahrtrichtung 12 nach hinten und zumindest bis zu einer Erstreckung der Räder in dieser Richtung. Dem ersten Bereich 72 schließt sich ein zweiter Bereich 73 an. In dem zweiten Bereich nimmt der Abstand 74 zwischen den Ausleger 71 bis zu einem freien Ende der Ausleger 71 zunehmend ab.

Im Übrigen ist der Abstand 74 an der Spitze der Ausleger 71 kleiner als die Breite des Ballens 2. Dadurch wird der über den Boden rollende Ballen 2 im zweiten Bereich 73 zwischen den Auslegern 71 abgebremst und/oder eingeklemmt. Indes wird das Umhüllmaterial 61 auf der Mantelfläche 22 des Ballens 2 von der Vorrichtung 7 unberührt gelassen und geschont. Der Ballen 2 wird derart an seinen Stirnflächen 21 festgehalten, bis er von den Auslegern 71 wieder freigegeben wird. Zur Freigabe des Ballens 2 sind die Ausleger 71 von einer Klemmstellung III, in der sie an den Ballen 2 angelegt und/oder angedrückt sind, in eine Freigabestellung IV, in der sie den Ballen 2 freigeben, überführbar. Zur Überführung ist ein verstellbarer Abschnitt 762 der Ausleger 71 um eine Schwenkachse 78, die sich im Wesentlichen parallel zur Stirnfläche 21 der Ballen erstreckt, schwenkbar ausgebildet. Durch Verschwenken des verstellbaren Abschnitts 762 nach außen kann der Ballen 2 freigegeben werden, während durch Verschwenken nach innen der Ballen 2 eingeklemmt werden kann.

In der Klemmstellung III ist der Abstand 74 zwischen den verstellbaren Abschnitten 762 der Ausleger 71 gegenüber der Breite des Ballens 2 geringer. Dadurch ragt der verstellbare Abschnitt 762 der Ausleger 71 in den vom Ballen 2 in Anspruch genommenen Raum hinein. Dadurch wird der Ballen 2 an seinen Stirnflächen 21 von den Auslegern 71 eingedrückt und/oder die Ausleger 71 geben dem Ballen 2 nach. Zum Anlegen und Andrücken weisen die Ausleger 71 jeweils eine Kontaktfläche 79 auf, die eine aufgebrachte Klemmkraft auf die Stirnseiten 21 des Ballens 2 flächig verteilt.

Um die Klemmkraft zum Einklemmen des Ballens 2 auf die Stirnflächen 21 aufzubringen, weist die Vorrichtung 7 an den Auslegern 71 jeweils einen Aktor 75 auf.

Dabei sind die Aktoren 75 zur reversiblen Überführung der ihnen jeweils zugeordneten Ausleger 71 zwischen der Klemmstellung III und der Freigabestellung IV vorgesehen. Dazu greifen die Aktoren 75 jeweils mit einem ersten Ende 751 gelenkig an einem starren Teil des jeweiligen Auslegers 71 und mit einem zweiten Ende 752 gelenkig an dem verstellbaren Abschnitt 762 des jeweiligen Auslegers 71 an. Beim Ausfahren des Aktors 75 wird der verstellbare Abschnitt 762 um die Schwenkachse 78 in Richtung zum Ballen 2 hin verschwenkt, während beim Einfahren des Aktors 75 der verstellbare Abschnitt 762 vom Ballen 2 weg verschwenkt wird.

Mit seinem ersten Ende ist der Aktor 75 dabei drehbar mit einem Bolzen am starren Teil des Auslegers 71 verbunden, wobei der Bolzen in einem von mehreren Löchern einer Lochreihe 77 angebracht ist. Durch Anbringen des Bolzens in ein anderes Loch der Lochreihe 77 kann ein Angriffspunkt des Aktors 75 an einem feststehenden Abschnitt 761 des Auslegers 71 verändert werden, d.h. der Angriffspunkt kann dadurch weiter zum Ballen 2 hin oder vom Ballen 2 weg angeordnet sein. Durch die Wahl eines Lochs der Lochreihe 77 zur Anbringung des Bolzens ist somit ein Abstand 74 zwischen den Auslegern 71 einstellbar. Eine Brems- und/oder Klemmwirkung der Ausleger 71 auf den Ballen 2 kann somit durch eine Verringerung des Abstands 74 erhöht oder durch eine Erhöhung des Abstands 74 reduziert werden. Zusätzlich oder alternativ kann auch ein Ausfahrweg der Aktoren 75 programmierbar und/oder durch einen wechselbaren Anschlag (nicht dargestellt) begrenzt sein, sodass dadurch der Abstand 74 einstellbar ist.

Zur Ansteuerung der Aktoren 75 weist die Rundballenpresse 1 eine Steuerungseinheit 15 auf. Sie ist dazu eingerichtet die Überführung der Ausleger 71 von der Klemmstellung III in die Freigabestellung IV und umgekehrt einzuleiten. Die Steuerungseinheit 15 überführt dabei die Ausleger 71 automatisch in die Klemmstellung III, sobald die Heckklappe 42 nach unten verschwenkt ist, während sie die Ausleger 71 automatisch in die Freigabestellung IV überführt, sobald nach Ablage des Ballens 2 eine Weiterfahrt eingeleitet wird. Eine manuelle Überführung erfolgt dahingehend zusätzlich oder alternativ durch einen Bediener der Rundballenpresse 1 von einem Bedienelement (nicht dargestellt) aus. Nach Freigabe des Ballens 2 kann die Rundballenpresse 1 die Weiterfahrt zur Bildung eines nächsten Ballens 2 wiederaufnehmen.

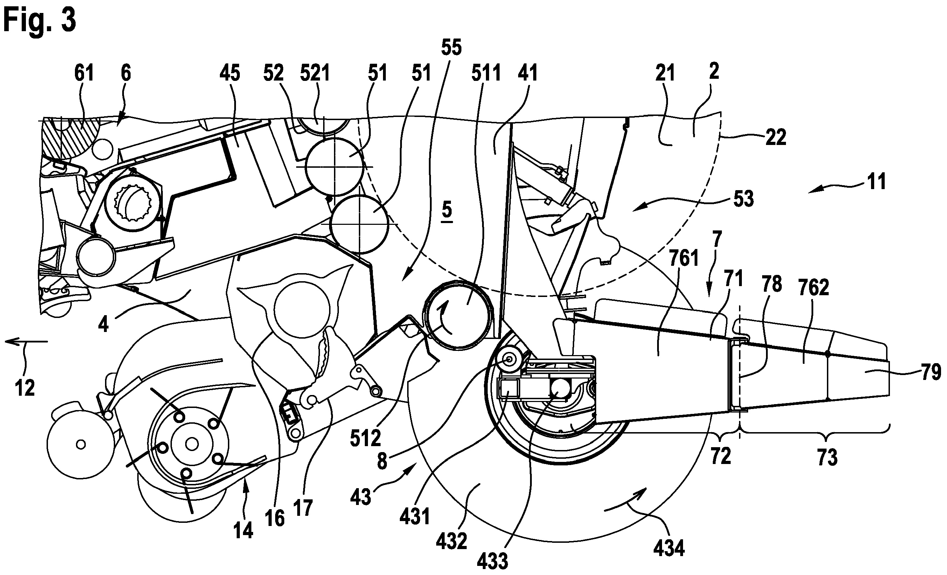

Fig 3 zeigt einen Ausschnitt der Rundballenpresse 1 in einer seitlichen Schnittansicht. Gezeigt ist die zur Aufnahme des Ernteguts vom Boden vorgesehene Pick-up 14 und ein der Pick-up 14 in Gutflussrichtung 18 nachgeordneter Schneid- und/oder Förderrotor 16, der das Erntegut durch einen Spalt 55 zwischen Presswalzen 51 der Ballenkammer 5 zuführt. Die Fig. 3 zeigt außerdem den Rahmen 4, an dem vorderseitig die Deichsel 44 angeordnet ist, und das Fahrgestell 43 in einer Seitenansicht mit den an dem Achsaufbau 431 des Fahrgestells 43 angeordneten Rädern 432, die sich bei einer Fortbewegung der Rundballenpresse 1 in Fahrtrichtung 12 um die Radachse 433 drehen. Ebenso gezeigt ist eine Einrichtung 6 zum Umhüllen des Ballens 2 mit Umhüllmaterial 61.

In der Ballenkammer 5 wird das Erntegut mittels Pressriemen 52 und -walzen 51, 511 zu einem Ballen 2 geformt. Eine Öffnung 53, durch die der Ballen 2 die Ballenkammer 5 verlassen kann, ist an der Rückseite 11 der Rundballenpresse 1 ausgebildet. Beim Auswurf des Ballens 2 dreht die Starterwalze 511 um eine Drehrichtung 512 und setzt den Ballen 2 in Bewegung. Unterstützt durch die Starterwalze 511 und aufgrund seiner Schwerkraft wird Ballen 2 aus der Ballenkammer 5 befördert und in den Ablageraum 54 abgelegt. Der Ablageraum 54 erstreckt sich dabei ausgehend von der Öffnung 53 in einer Erstreckungsrichtung der Ausleger 71. Dabei rollt der Ballen über eine Gleitrolle 8 hinweg und trifft in einem Bereich nahe der Radachse 433 und/oder zwischen den Auslegern 71 der Vorrichtung 7 auf dem Feldboden auf. Die Gleitrolle 8 verhindert dabei, dass der Ballen 2 mit der Mantelfläche 22 auf einem Achsaufbau 431 des Fahrgestell 43 auftrifft und diesen beschädigt und/oder dass der Ballen 2 durch den Aufprall selbst beschädigt wird. Dazu ist die Gleitrolle 8 unterhalb und hinter der Starterwalze 511, beabstandet von der Ballenkammer 5 angeordnet. Sie überdeckt ferner den Achsaufbau 431, an dem die Radachsen 433 angeordnet sind.

Entlang des erstens Bereichs 72 der Vorrichtung 7 wird der Ballen 2 bei seiner Rollbewegung aus der Ballenkammer 5 heraus erst geführt, und nachdem er anschließend in den zweiten Bereich 73 einrollt durch die Ausleger 71 abgebremst und zwischen ihnen eingeklemmt. Dabei wirken die Kontaktflächen 79 der Ausleger 71 auf die Stirnflächen 21 des Ballens 2 ein. Zur Freigabe des eingeklemmten Ballens wird der verstellbare Abschnitt 762 um die Schwenkachse 78 verschwenkt, sodass die Ausleger 71 von der Klemmstellung III in die Freigabestellung IV überführt werden.

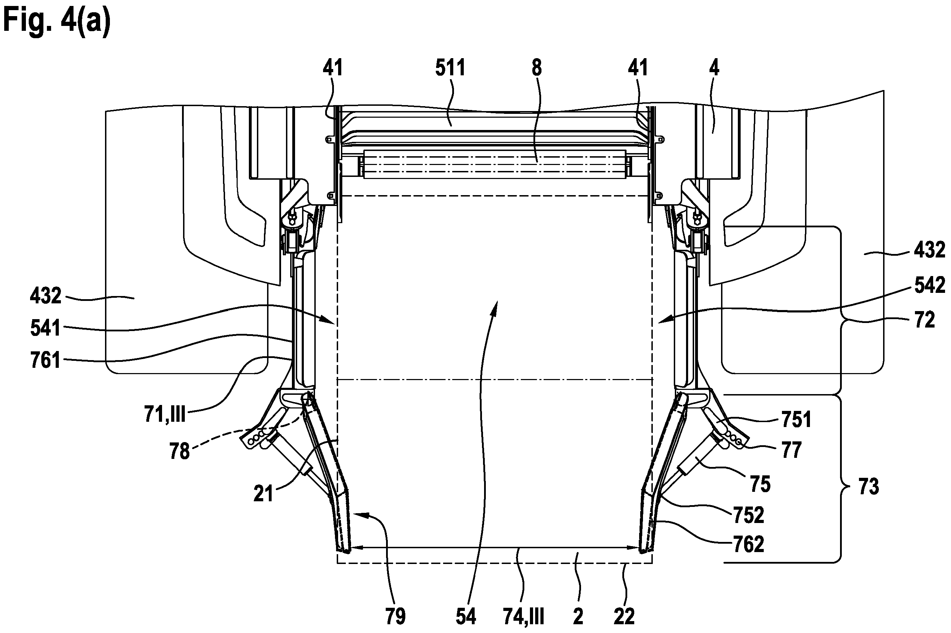

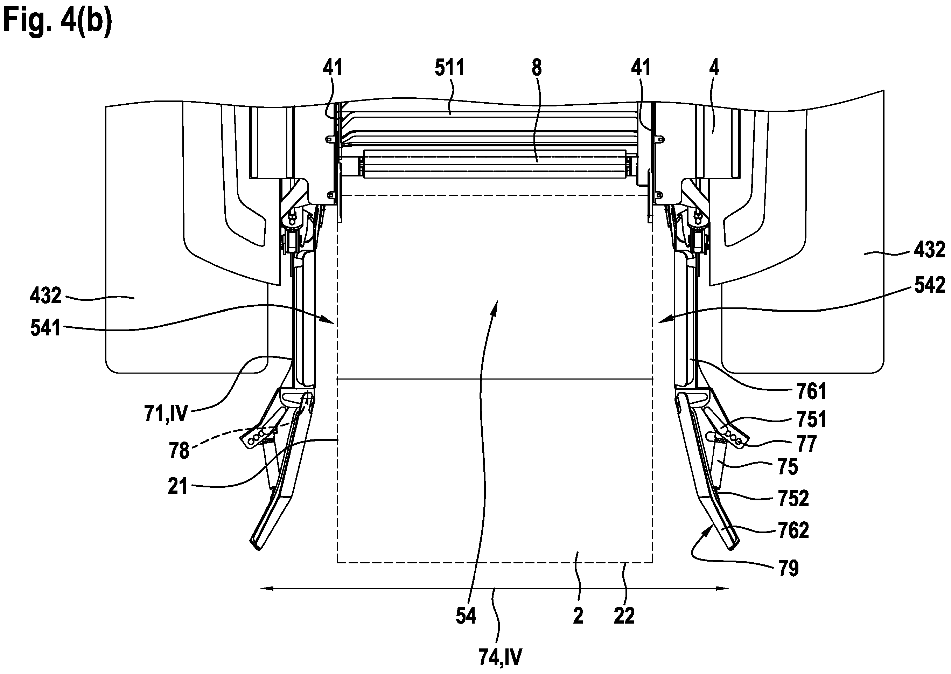

Fig. 4 zeigt dabei einen Ausschnitt der Rundballenpresse 1 in einer Draufsicht. Gezeigt ist dabei die Vorrichtung 7 mit ihren Auslegern 71, die an gegenüberliegnden Seiten 541, 542 des Ablageraums angeordnet sind und die an den Seitenwänden 41 des Gehäuses 45 mit dem Rahmen 4 der Rundballenpresse 1 verbunden sind. Dabei ist die Vorrichtung 7 in Fig. 4(a) in ihrer Klemmstellung III und in Fig. 4(b) in ihrer Freigabestellung IV dargestellt. Gezeigt sind außerdem die Starterwalze 511 und die Gleitrolle 8, die entgegen der Fahrtrichtung hinter der Starterwalze 511 angeordnet ist und an der der Ballen 2 abgleitet und/oder abrollt, bevor er auf den Boden auftrifft.

Zu sehen ist, dass die Ausleger in einem ersten Bereich 72 einen gleichbleibenden Abstand 74 aufweisen, und dass der Abstand 74 in einem zweiten Bereich 73 entgegen der Fahrtrichtung 12 abnimmt. Dabei sind die Ausleger 71 zwischen den Rädern 432 angeordnet. Der Ballen 2 wird so im ersten Bereich 72 zwischen den Auslegern 71 geführt. Im zweiten Bereich 73 ist der Ballen 2 zwischen den Auslegern 71 in Fig. 4(a) eingeklemmt dargestellt und in Fig. 4(b) von den Auslegern 71 freigegeben dargestellt.

Gezeigt ist in Fig 4(a), dass die verstellbaren Abschnitte 762 mit ihren Kontaktflächen 79 in den vom Ballen 2 eingenommenen Raum hineinragen, sodass sie den Ballen 2 eindrücken und einklemmen. Um die für die Klemmung des Ballens 2 erforderliche Klemmkraft aufzubringen, ist an den Auslegern 71 jeweils ein Aktor 75 vorgesehen, der im ausgefahrenen Zustand den zugeordneten Ausleger 71 in die Klemmstellung III überführt und in dieser hält. In der Klemmstellung III legen und/oder drücken dabei die Aktoren 75 beidseitig den ihnen jeweils zugeordneten Ausleger 71 an die Stirnseiten 21 des Ballens 2 an. Die hierbei aufgebrachte Klemmkraft wird über die Kontaktflächen 79 beidseitig auf die Stirnseiten 21 des Ballens 2 übertragen. Dabei bleibt die Mantelfläche 22 des Ballens 2 von den Auslegern 71 unberührt. Gegenüber der Fig. 4(a) ist der Aktor 75 in der Fig. 4(b) eingefahren, sodass die verstellbaren Abschnitte 762 der Ausleger 71 von dem Ballen 2 weg verschwenkt sind. Beim Einfahren verschwenkt der Aktor 75 den verstellbaren Abschnitt 762 um die Schwenkachse 78 vom Ballen 2 weg und überführt so den zugeordneten Ausleger 71 in die Freigabestellung IV, damit die Weiterfahrt der Rundballenpresse 1 erfolgen kann. Zum Verschwenken ist der Aktor 75 mit dem ersten Ende 751 an dem feststehenden Abschnitt 761 des Auslegers 71 gelenkig über einen Bolzen gekoppelt und ebenso gelenkig mit dem zweiten Ende 752 am verstellbaren Abschnitt 762 gekoppelt. Zu sehen ist, dass der Bolzen dabei in einem von mehreren Löchern der Lochreihe 77 gesteckt ist, wobei durch Einstecken des Bolzens in ein anderes Loch der Lochreihe 77 der Abstand 74 zwischen den Auslegern 71 konfigurierbar ist.

Durch die Nutzung der in Fig. 4(a) und 4(b) gezeigten Merkmale ist eine Ablage von Ballen 2 in Hanglage möglich, wobei es sich als vorteilhaft erwiesen hat, die Rundballenpresse 1 vor der Ablage so auszurichten, dass der Ballen 2 nach der Ablage nicht eigenmächtig wegrollen kann. Um die Rundballenpresse 1 auszurichten wird diese rückwärtsgefahren. Nach Ausrichten der Rundballenpresse 1 erfolgt das Verschwenken der Heckklappe 42 nach oben und die Ablage des Ballens 2 in den Ablageraum 54 mit Klemmung durch die Vorrichtung 7. Bei der Ablage auf dem Feldboden befinden sich demnach die Ausleger 71 in der Klemmstellung und werden anschließend zur Freigabe des Ballens 2 in die Freigabestellung überführt. Daraufhin kann eine Weiterfahrt zur Bildung eines nächsten Ballens 2 erfolgen.

## Patentansprüche

1. Rundballenpresse (1) zur Herstellung von zylinderförmigen Erntegutballen (2), umfassend einen Rahmen (4), der von einem Fahrgestell (43) getragen ist, eine Ballenkammer (5) mit Pressmitteln (51, 511, 52) zum Pressen des Ernteguts und eine Einrichtung (6) zum Umhüllen des Ballens (2) mit einem Umhüllmaterial (61), wobei die Ballenkammer (5) an einer Rückseite (11) der Rundballenpresse (1) eine Öffnung (53) zur Abgabe des Ballens (2) auf den Feldboden aufweist,
wobei die Rundballenpresse (1) einen Ablageraum (54) aufweist, der der Öffnung (53) nachgeordnet ist, wobei der in den Ablageraum (54) abgelegte Ballen (2) auf dem Feldboden zwischen und hinter Rädern (432) angeordnet ist, wobei die Rundballenpresse (1) eine Vorrichtung (7) aufweist, die mindestens zwei Ausleger (71) umfasst, die voneinander beabstandet und an gegenüberliegenden Seiten (541, 542) des Ablageraums (54) angeordnet sind, wobei ein Abstand (74) zwischen den Auslegern (71) wenigstens bereichsweise verstellbar vorgesehen ist, wobei zumindest einer der Ausleger (71) reversibel von einer Freigabestellung (IV) in eine Klemmstellung (III) überführbar ist, in der der Abstand (74) zwischen den Auslegern (71) gegenüber der Freigabestellung (IV) zumindest bereichsweise verringert ist, wobei die Vorrichtung (7) dazu eingerichtet ist, mit wenigstens einer Stirnseite (21) des Ballens (2) zusammenzuwirken und den Ballen (2) bei der Abgabe in den Ablageraum (54) zu klemmen,
wobei die Ausleger (71) jeweils zumindest eine Kontaktfläche (79) zum Anlegen und/oder Andrücken an Stirnseiten (21) des Ballens aufweisen, die eine auf die Stirnseiten (21) des Ballens (2) aufgebrachte Klemmkraft flächig verteilt.

2. Rundballenpresse (1) nach Anspruch 1, **dadurch gekennzeichnet, dass** beim Auswurf des Ballens (2) die Starterwalze (511) um eine Drehrichtung (512) dreht und den Ballen (2) in Bewegung setzt, wobei unterstützt durch die Starterwalze (511) und aufgrund seiner Schwerkraft der Ballen (2) aus der Ballenkammer (5) befördert und in den Ablageraum (54) abgelegt wird, wobei sich der Ablageraum (54) dabei ausgehend von der Öffnung (53) in einer Erstreckungsrichtung der Ausleger (71) erstreckt.

3. Rundballenpresse (1) einem der vorherigen Ansprüche, **dadurch gekennzeichnet, dass** wenigstens einer der Ausleger (71) einen verstellbaren Abschnitt (762) aufweist und dass der verstellbare Abschnitt (762) zur Überführung des Auslegers (71) von der Klemmstellung (III) in die Freigabestellung (IV) und umgekehrt schwenkbeweglich ausgebildet ist.

4. Rundballenpresse (1) nach Anspruch 3, **dadurch gekennzeichnet, dass** beide Ausleger (71) den verstellbaren Abschnitt (762) aufweisen.

5. Rundballenpresse (1) nach einem der Ansprüche 3-4, **dadurch gekennzeichnet, dass** in der Klemmstellung (III) der Abstand (74) zwischen verstellbaren Abschnitten (762) der Ausleger (71) gegenüber einer Breite des Ballens (2) geringer ist, so dass der Ballen (2) an seinen Stirnflächen (21) von den Auslegern (71) eingedrückt wird und/oder die Ausleger (71) dem Ballen (2) nachgeben.

6. Rundballenpresse (1) nach einem der vorherigen Ansprüche, **dadurch gekennzeichnet, dass** sie eine Gleitrolle (8) aufweist, die unterhalb einer Presswalze (51), insbesondere einer Starterwalze (511), beabstandet von der Ballenkammer (5) angeordnet ist, und dazu vorgesehen ist, den Ballen (2) beim Auswurf und/oder vor dem Aufprall auf dem Feldboden zu führen.

7. Rundballenpresse (1) nach einem der vorherigen Ansprüche, **dadurch gekennzeichnet, dass** die Ausleger (71) zwischen den Rädern (432) der Rundballenpresse (1) angeordnet sind, wobei dabei der Ballen (2) zwischen den Rädern (432) seitlich geführt wird, sodass Beschädigungen am Ballen (2) durch Kontakt mit den Rädern (432) vermeidbar sind, wobei dabei die Ausleger (71) auf einer Höhe einer Radachse (433) positioniert sind.

8. Rundballenpresse (1) nach einem der vorherigen Ansprüche, **dadurch gekennzeichnet, dass** die Vorrichtung (7) mindestens einen Aktor (75) zum Verstellen des wenigstens einen, reversibel von einer Freigabestellung (IV) in eine Klemmstellung (III) überführbaren, Auslegers (71) aufweist, der dazu vorgesehen ist, eine Druckkraft auf zumindest eine der Stirnseiten (21) des Ballens (2) aufzubringen.

9. Rundballenpresse (1) nach Anspruch 8, **dadurch gekennzeichnet, dass** sie eine Steuerungseinheit (15) zur Ansteuerung der Aktoren (75) aufweist, die dazu eingerichtet ist, die Überführung des zumindest einen, reversibel von einer Freigabestellung (IV) in eine Klemmstellung (III) überführbaren, Auslegers (71) von der Klemmstellung (III) in die Freigabestellung (IV) und umgekehrt automatisch und/oder manuell einzuleiten.

10. Rundballenpresse (1) nach Anspruch 9, **dadurch gekennzeichnet, dass** die Steuerungseinheit (15) dazu eingerichtet ist, die Überführung der Ausleger (71) von der Klemmstellung (III) in die Freigabestellung (IV) und umgekehrt einzuleiten, und dabei die Ausleger (71) automatisch in die Klemmstellung (III) zu überführen, sobald die Heckklappe (42) nach unten verschwenkt ist, und die Ausleger (71) automatisch in die Freigabestellung (IV) zu überführen, sobald nach Ablage des Ballens (2) eine Weiterfahrt eingeleitet wird.

## Claims

1. Round baler (1) for producing cylindrical bales of harvested crop (2), comprising a frame (4) supported by a chassis (43), a bale chamber (5) with pressing means (51, 511, 52) for pressing the harvested crop, and a device (6) for wrapping the bale (2) with a wrapping material (61), wherein the bale chamber (5) has an opening (53) at a rear (11) of the round baler (1) for dispensing the bale (2) onto the field ground, wherein the round baler (1) has a storage space (54) downstream of the opening (53), wherein the bale (2) deposited in the storage space (54) is arranged on the field ground between and behind wheels (432), wherein the round baler (1) has an apparatus (7) comprising at least two arms (71) spaced apart from each other and located on opposite sides (541, 542) of the storage space (54), wherein a distance (74) between the arms (71) is provided to be adjustable at least in certain areas, wherein at least one of the arms (71) can be reversibly transferred from a release position (IV) to a clamping position (III) in which the distance (74) between the arms (71) is reduced at least in certain areas compared to the release position (IV), wherein the apparatus (7) is configured to interact with at least one end face (21) of the bale (2) and to clamp the bale (2) when it is dispensed into the storage space (54), wherein the arms (71) each have at least one contact surface (79) for applying and/or pressing against the end faces (21) of the bale, which distributes a clamping force applied to the end faces (21) of the bale (2) over a surface area.

2. Round baler (1) according to claim 1, **characterized in that** when the bale (2) is ejected, the starter roller (511) rotates in a direction of rotation (512) and sets the bale (2) in motion, assisted by the starter roller (511) and due to its gravity the bale (2) being transported from the bale chamber (5) and deposited in the storage space (54), the storage space (54) extending from the opening (53) in a direction of extension of the arms (71).

3. Round baler (1) according to either of the preceding claims, **characterized in that** at least one of the arms (71) has an adjustable portion (762) **and in that** the adjustable portion (762) for transferring the arm (71) from the clamping position (III) to the release position (IV) and vice versa is designed to be pivotally movable.

4. Round baler (1) according to claim 3, **characterized in that** both arms (71) have the adjustable portion (762).

5. Round baler (1) according to any of claims 3-4, **characterized in that** in the clamping position (III) the distance (74) between adjustable portions (762) of the arms (71) is less than the width of the bale (2), so that the bale (2) is pressed in on its end faces (21) by the arms (71) and/or the arms (71) give way to the bale (2).

6. Round baler (1) according to any of the preceding claims,
**characterized in that** it has a sliding roller (8) which is arranged below a press roller (51), in particular a starter roller (511), spaced apart from the bale chamber (5), and is designed to guide the bale (2) during ejection and/or before impact on the field ground.

7. Round baler (1) according to any of the preceding claims,
**characterized in that** the arms (71) are arranged between the wheels (432) of the round baler (1), the bale (2) being guided laterally between the wheels (432) so that damage to the bale (2) by contact with the wheels (432) can be avoided, the arms (71) being positioned at the height of a wheel axle (433).

8. Round baler (1) according to any of the preceding claims,
**characterized in that** the apparatus (7) has at least one actuator (75) for adjusting the at least one arm (71) which can be reversibly transferred from a release position (IV) to a clamping position (III) and which is designed to apply a pressure force to at least one of the end faces (21) of the bale (2).

9. Round baler (1) according to claim 8, **characterized in that** it has a control unit (15) for controlling the actuators (75) which is configured to automatically and/or manually initiate the transfer of the at least one arm (71), which can be reversibly transferred from a release position (IV) to a clamping position (III), from the clamping position (III) to the release position (IV) and vice versa.

10. Round baler (1) according to claim 9, **characterized in that** the control unit (15) is configured to initiate the transfer of the arms (71) from the clamping position (III) to the release position (IV) and vice versa, automatically transferring the arms (71) to the clamping position (III) as soon as the tailgate (42) is pivoted downward, and automatically transferring the arms (71) to the release position (IV) as soon as travel is initiated after the bale (2) has been deposited.

## Revendications

1. Presse à balles rondes (1) pour la fabrication de balles de récolte cylindriques (2), comprenant un cadre (4) qui est soutenu par un châssis (43), une chambre de pressage (5) comportant des moyens de pressage (51, 511, 52) permettant de comprimer la récolte, et un appareil (6) permettant d'envelopper la balle (2) d'un matériau d'enveloppement (61), dans laquelle la chambre de pressage (5) présente, sur une face arrière (11) de la presse à balles rondes (1), une ouverture (53) pour l'évacuation de la balle (2) sur le sol du champ, dans laquelle la presse à balles rondes (1) présente un espace de dépôt (54) disposé en aval de l'ouverture (53), dans laquelle la balle (2) déposée dans l'espace de dépôt (54) est disposée sur le sol du champ entre et derrière des roues (432), dans laquelle la presse à balles rondes (1) présente un dispositif (7) qui comprend au moins deux bras (71) espacés l'un de l'autre et disposés sur des faces (541, 542) opposées de l'espace de dépôt (54), dans laquelle une distance (74) entre les bras (71) est prévue de manière à être réglable au moins dans certaines zones, dans laquelle au moins l'un des bras (71) peut être transféré de manière réversible d'une position de dégagement (IV) vers une position de serrage (III), dans laquelle la distance (74) entre les bras (71) est réduite, au moins dans certaines zones, par rapport à dans la position de dégagement (IV), dans laquelle le dispositif (7) est conçu pour coopérer avec au moins une face frontale (21) de la balle (2) et pour serrer la balle (2) lors de son dépôt dans l'espace de dépôt (54), dans laquelle les bras (71) présentent respectivement au moins une surface de contact (79) destinée à venir en appui et/ou à exercer une pression sur les faces frontales (21) de la balle, laquelle surface de contact répartit sur toute la surface une force de serrage appliquée sur les faces frontales (21) de la balle (2).

2. Presse à balles rondes (1) selon la revendication 1, **caractérisée en ce que**, lors de l'éjection de la balle (2), le rouleau de démarrage (511) tourne dans un sens de rotation (512) et met la balle (2) en mouvement, dans laquelle la balle, aidée par le rouleau de démarrage (511) et sous l'effet de sa propre gravité (2), est transportée hors de la chambre de pressage (5) et déposée dans l'espace de dépôt (54), dans laquelle l'espace de dépôt (54) s'étend ainsi à partir de l'ouverture (53) dans une direction d'extension des bras (71).

3. Presse à balles rondes (1) selon l'une des revendications précédentes, **caractérisée en ce qu'**au moins l'un des bras (71) présente une section réglable (762) **et en ce que** la section réglable (762) est réalisée de manière à pouvoir pivoter pour transférer le bras (71) de la position de serrage (III) à la position de dégagement (IV) et inversement.

4. Presse à balles rondes (1) selon la revendication 3, **caractérisée en ce que** les deux bras (71) présentent la section réglable (762).

5. Presse à balles rondes (1) selon l'une des revendications 3 à 4, **caractérisée en ce que**, dans la position de serrage (III), la distance (74) entre des sections réglables (762) des bras (71) est inférieure à la largeur de la balle (2), de sorte que la balle (2) est enfoncée au niveau de ses faces frontales (21) par les bras (71) et/ou que les bras (71) cèdent sous la pression de la balle (2).

6. Presse à balles rondes (1) selon l'une des revendications précédentes, **caractérisée en ce qu'**elle présente un rouleau de glissement (8) qui est disposé en dessous d'un rouleau de pressage (51), en particulier d'un rouleau de démarrage (511), à distance de la chambre de pressage (5), et est prévu pour guider la balle (2) lors de son éjection et/ou avant son impact sur le sol du champ.

7. Presse à balles rondes (1) selon l'une des revendications précédentes, **caractérisée en ce que** les bras (71) sont disposés entre les roues (432) de la presse à balles rondes (1), dans laquelle la balle (2) est ainsi guidée latéralement entre les roues (432), de sorte que des dommages au niveau de la balle (2) à cause du contact avec les roues (432) peuvent être évités, dans laquelle les bras (71) sont ainsi positionnés à la hauteur d'un axe de roue (433).

8. Presse à balles rondes (1) selon l'une des revendications précédentes, **caractérisée en ce que** le dispositif (7) présente au moins un actionneur (75) permettant de régler l'au moins un bras (71) pouvant être transféré de manière réversible d'une position de dégagement (IV) à une position de serrage (III), lequel bras est prévu pour appliquer une force de pression sur au moins l'une des faces frontales (21) de la balle (2).

9. Presse à balles rondes (1) selon la revendication 8,
**caractérisée en ce qu'**elle présente une unité de commande (15) permettant de commander les actionneurs (75), laquelle est configurée pour déclencher automatiquement et/ou manuellement le transfert de l'au moins un bras (71), lequel peut être transféré de manière réversible d'une position de dégagement (IV) à une position de serrage (III), de la position de serrage (III) à la position de dégagement (IV) et inversement.

10. Presse à balles rondes (1) selon la revendication 9, **caractérisée en ce que** l'unité de commande (15) est configurée pour déclencher le transfert des bras (71) de la position de serrage (III) à la position de dégagement (IV) et inversement, et, ainsi, pour transférer automatiquement les bras (71) dans la position de serrage (III) dès que le hayon (42) est pivoté vers le bas, et pour transférer automatiquement les bras (71) dans la position de dégagement (IV) dès que la poursuite du déplacement est déclenchée après le dépôt de la balle (2).
